# EUROPÄISCHE PATENTSCHRIFT

(11) **EP 0 830 219 B1**
(45) Veröffentlichungstag und Bekanntmachung des Hinweises auf die Patenterteilung: **08.01.2003**
(21) Anmeldenummer: 96919734.2
(22) Anmeldetag: 09.05.1996
(51) Int. Cl.: B05D 7/04, B32B 15/08, B32B 27/08, B05D 7/00

(54) **MIT MEHREREN SCHICHTEN BESCHICHTETE FOLIEN UND VERFAHREN ZUR DEREN HERSTELLUNG**
FILMS PROVIDED WITH SEVERAL COATING LAYERS AND METHOD OF MANUFACTURING THE SAME
FILMS POURVUS DE PLUSIEURS COUCHES DE REVETEMENT ET METHODE DE LEUR FABRICATION

(30) Priorität: 10.05.1995 DE 19517067
(43) Veröffentlichungstag der Anmeldung: 25.03.1998
(73) Patentinhaber: BASF Coatings Aktiengesellschaft, 48165 Münster (DE)
(72) Erfinder: KIRIAZIS, Leonidas, D-48151 Münster (DE); WEGNER, Egon, D-48143 Münster (DE)
(74) Vertreter: Fitzner, Uwe, Dr.
(86) Internationale Anmeldenummer: EP9601957
(87) Internationale Veröffentlichungsnummer: WO96035519

(56) Entgegenhaltungen:
- EP-A- 0 285 071
- EP-A- 0 361 823
- EP-A- 0 395 226
- US-A- 4 933 237
- US-A- 5 268 215

## Beschreibung

Die vorliegende Erfindung betrifft mit wenigstens einer pigmentierten Lackschicht beschichtete Folie, ein Verfahren zur Herstellung dieser Folie und die Verwendung der Folie im Automobilbau.

In der EP-A-374 551 werden beschichtete Substrate offenbart, die zur Herstellung von Anbauteilen für Automobilkarosserien geeignet sind. Die in der EP-A-374 551 beschriebenen beschichteten Substrate bestehen aus Metallblechen, die mit mindestens einer Lackschicht lackiert sind oder aus Verbundwerkstoffen, deren Oberflächenschicht aus den lackierten Metallblechen besteht.

Aus der P4424290.9 sind mit mehreren Schichten beschichtete Substrate bekannt. Diese werden verformt und ggf. mit Hilfe von weiteren Materialien weiterverarbeitet. Auf diese Weise können Anbauteile für Fahrzeugkarosserien hergestellt werden.

Aus der EP 0 395 226 sind beschichtete Folien zur Herstellung von Anbauteilen für die Automobilkarosserien bekannt. Diese beschichteten Folien weisen eine Kleberschicht auf, welche die Haftung einer aus einem Farblack und Klarlack bestehenden Farbschicht an einer Trägerfolie vermittelt.

Der vorliegenden Erfindung lag die Aufgabe zugrunde, mit wenigstens einer pigmentierten Lackschicht beschichteten Folien bereitzustellen, die auf Formteilrohlinge, vorzugsweise Metalibleche vor deren Verformung, aufbringbar ist, die nach der Verformung des Rohlings gegenüber den in der EP-A-374 551 offenbarten beschichtetem Substrat verbesserte Eigenschaften aufweist, bei derer Herstellung nur geringe Mengen an Lösemitteln emittiert werden und eine einfache Qualitätsüberwachung möglich ist.

Diese Aufgabe wird erfindungsgemäß durch die Bereitstellung von mit wenigstens einer pigmentierten Lackschicht beschichteter Folie gelöst, die dadurch gekennzeichnet ist, daß
A zwischen einer Kunststoffträgerfolie und der pigmentierten Lackschicht ggf. eine Füllerzusammensetzung aufgebracht ist und
B die pigmentierte Lackschicht mit einer transparenten Kunststoffolie beschichtet ist.

Die transparente Kunststoffolie ist UV-beständig. Zwischen der transparenten Kunststoffolie und der pigmentierten Lackschicht kann eine Haftvermittlerschicht angeordnet sein.

Auf die transparente Kunststoffolie und/oder die pigmentierte Lackschicht und/oder die nicht lackierte Seite der Trägerfolie ist ggf. eine abziehbare Folie geschichtet.

Die vorliegende Erfindung betrifft auch ein Verfahren zur Herstellung einer mit mehreren Schichten beschichteten Folie, wobei die Trägerfolie eine Dicke von 10 bis 500 µm aufweist, mit den Schritten
A die Oberfläche einer Kunststoffträgerfolie wird ggf. mit einer Füllerzusammensetzung lackiert,
B die Oberfläche der Kunststoffträgerfolie bzw. der Füllerzusammensetzung wird mit mindestens einer pigmentierten Lackschicht überlackiert und
C die pigmentierte Lackschicht wird mit einer transparenten Kunststoffolie beschichtet.

Hierbei kann die Aushärtung der in Stufe A aufgetragenen Füllerschicht vor dem Überlackieren mit mindestens einer pigmentierten Lackschicht und die Aushärtung der in Stufe B aufgetragenen pigmentierten Lackschicht vor dem Auftragen der transparenten Kunststoffolie durchgeführt werden. Ggf. kann nach Stufe C eine abziehbare Schutzfolie aufgetragen werden.

Ein weiterer Gegenstand der vorliegenden Erfindung ist die Verwendung der erfindungsgemäßen beschichteten Folie zur Beschichtung von Formteilrohlingen zur Herstellung von Fahrzeugkarosserien, vorzugsweise Automobilkarosserien sowie zur Herstellung von Anbauteilen für Fahrzeugkarosserien. Femer betrifft die vorliegende Erfindung auch die Verwendung zur Beschichtung von Haushaltsgeräten, vorzugsweise Kühlschränken, Wasch- und Geschirrspülmaschinen. Erfindungsgemäß werden vorzugsweise für Automobilkarosserien geeignete Füllerzusammensetzungen und Lacke eingesetzt, sofern sie eine für die Erfindungszwecke ausreichende Flexibilität aufweisen, d.h. die ausgehärteten Beschichtungssysteme weisen T-Bend-Werte ≤ 3,0 vorzugsweise ≤ 2,0, besonders bevorzugt ≤ 1,0 auf.

Die mit der erfindungsgemäßen Folie beschichteten Automobilkarosserien zeichnen sich durch eine sehr hohe Resistenz gegenüber Steinschlag und Korrosion aus. Weitere Vorteile der erfindungsgemäßen beschichteten Folie bestehen darin, daß sie auf Anlagen mit einem geringen Raumbedarf herstellbar ist. Außerdem werden durch den Einsatz von lackierter Kunststoffolie für die Beschichtung von Karosserien nur sehr geringe Mengen an organischen Lösemitteln emittiert. Vorteilhafterweise setzt daher die Qualitätsüberwachung schon bei der lackierten Kunststoffolie ein, wohingegen beim konventionellen Lackieren von Metallblechen die Qualität der Beschichtung erst nach Applikation der Lackschichten auf das Substrat beurteilt werden kann und im Falle von Qualitätsmängeln das lackierte Substrat als Ganzes verworfen werden muß.

Bei der Herstellung der erfindungsgemäßen Folie kommen vorwiegend thermoplastische Stoffe in Betracht. In Stufe A kann eine Folie aus einem Polyolefin, einem Polyamid, einem Polyurethan, einem Polyester, einem Polyacrylat, einem Polycarbonat oder einer Mischung aus unterschiedlichen polymeren Stoffen eingesetzt werden. Die in Stufe A eingesetzte Kunststoffolie weist eine Dicke von 10-500, vorzugsweise 20-250 µm auf und kann Farbstoffe und/oder Pigmente enthalten.

Entsprechende Materialien sind auch als abziehbare Folie einsetzbar.

Sofern die Kunststoffolie zur Verwendung für Fahrzeugkarosserien eingesetzt wird und hierfür zusätzlich mit einer Füllerzusammensetzung lackiert werden soll, werden vorzugsweise zur Lackierung von Automobilkarosserien geeignete Füllerzusammensetzungen verwendet. Auch hier muß eine für die Erfindungszwecke ausreichende Flexibilität vorhanden sein. Diese kann erfindungsgemäß über den Vemetzungsgrad gesteuert werden.
Bei der konventionellen Lackierung von Automobilkarosserien wird die mittels Elektrotauchlackierung aufgebrachte Grundierung mit einer Füllerzusammensetzung überlackiert. Die auf diese Weise erhaltene Füllerschicht hat im wesentlichen zwei Aufgaben: Zum einen soll sie die Unebenheiten der Elektrotauchgrundierung ausgleichen und zum anderen die Steinschlagbeständigkeit der Gesamtlackierung verbessern. Die Füllerzusammensetzungen bestehen im wesentlichen aus einem Bindemittel, einem Vernetzungsmittel, Pigmenten und Füllstoffen sowie ggf. weiteren Additiven, wie z.B. Vernetzungskatalysatoren und Verlaufshilfsmitteln.
Die einsetzbaren Füllerzusammensetzungen können als Bindemittel beispielsweise Epoxidharze, Polyesterharze, Polyurethanharze, Polyacrylatharze und Alkydharze oder Kombinationen aus solchen Harzen enthalten. Als Vernetzungsmittel können die einsetzbaren Füllerzusammensetzungen Aminoplastharze, wie z.B. Melamin-Formaldehydharze, Amine, Polyisocyanate und Carboxylgruppen enthaltende Verbindungen enthalten. Als Beispiele für Pigmente, die in den einsetzbaren Füllerzusammensetzungen enthalten sein können, werden Titandioxid, Phthalocyanine, Eisenoxide und Ruß genannt. Als Füllstoffe können die Füllerzusammensetzungen beispielsweise Kalk oder Bariumsulfat enthalten.

Die mit der erfindungsgemäßen Folie beschichteten Formteile, z.B. Automobilkarosserien, weisen überraschenderweise auch dann eine gute Resistenz gegenüber Steinschlag auf, wenn in Stufe A keine Füllerzusammensetzung aufgebracht wird.

Auf die Oberfläche der Kunststoffolie bzw. auf die nach Durchführung der Stufe A erhaltene Füllerschicht wird in Stufe B mindestens eine pigmentierte Decklackschicht aufgebracht.

Hierfür kann jeder für die konventionelle Lackierung von Automobilkarosserien geeignete Decklack bzw. Basislack verwendet werden. Voraussetzung ist allerdings auch hier eine gute Flexibilität des ausgehärteten Lacks, ohne daß die Resistenz gegenüber Steinschlag und Korrosion verlorengeht. Derartige Lacke sind dem Fachmann gut bekannt. Sie enthalten im wesentlichen ein polymeres Bindemittel, ggf. ein Vemetzungsmittel sowie ein Pigment oder eine Mischung aus Pigmenten.
Der in Stufe B eingesetzte Decklack bzw. Basislack kann als Bindemittel beispielsweise ein Polyesterharz, ein Polyurethanharz oder ein Polyacrylatharz oder eine Mischung aus solchen Bindemitteln enthalten. Als Vemetzungsmittel kann der Decklack bzw. Basislack ein Aminoplastharz, ein Polyisocyanatharz, ein Carboxylgruppen enthaltendes Vernetzungsmittel oder eine Mischung aus solchen Vernetzungsmitteln enthalten. Als Beispiele für Pigmente, die in der in Stufe B aufgebrachten pigmentierten Decklackschicht bzw. Basislackschicht enthalten sein können, werden Titandioxid, Phthalocyaninpigmente, Ruß, Eisenoxidpigmente, Aluminiumplättchenpigmente und Perlglanzpigmente genannt.

In Stufe C wird auf die in Stufe B applizierte Lackschicht eine transparente Kunststoffolie aufgetragen. Im Prinzip können hier die Materialien eingesetzt werden, die auch für die Trägerfolie geeignet sind.

Die auf die Oberfläche der Kunststoffolie aufgetragene(n) Lackschicht(en) wird/werden ausgehärtet, wobei die Aushärtung der in Stufe A aufgetragenen Füllerschicht vor dem Überlackieren mit mindestens einer pigmentierten Lackschicht und die Aushärtung der in Stufe B aufgetragenen pigmentierten Basislackschicht vor dem Beschichten mit der transparenten Kunststoffolie durchgeführt werden kann. Es ist auch möglich, die in Stufe A aufgetragene Füllerschicht in nicht-ausgehärtetem Zustand mit einer Basislackschicht überzulackieren und sodann vor dem Auftragen der transparenten Kunststoffolie Füller-und Basislackschicht gemeinsam auszuhärten. Die Aushärtung der Lackschichten erfolgt üblicherweise durch Erhitzen auf Temperaturen von 60 bis 230°C. Dabei kommt es zu einer Reaktion zwischen den in den Lacken enthaltenen Bindemitteln und Vernetzungsmitteln, und es werden dreidimensionale polymere Netzwerke gebildet, die der Lackoberfläche eine besonders hohe Resistenz gegenüber mechanischen oder chemischen Angriffen verleihen.

Die Applikation der Lackschichten kann beispielsweise durch Spritzen, Walzen oder Rakeln erfolgen.

Die erfindungsgemäß beschichteten Folien lassen sich zusammenrollen. Daher können die Produkte in Form von Rollen angeboten und geliefert werden. Aus diesem Grunde müssen die erfindungsgemäß eingesetzten Lacke eine für das Zusammenrollen ausreichende Flexibilität aufweisen.

Die Folie kann im Prinzip auf alle Formteilrohlinge, vorzugsweise Metallbleche, die zur Herstellung von Fahrzeugkarosserien, von Anbauteilen für Fahrzeugkarosserien, von Haushaltsgeräten, z.B. Kühlschränken, Waschmaschinen, Geschirrspülmaschinen geeignet sind, aufgebracht werden. Vorwiegend werden die Folien auf vorbehandelte Metallbleche aufgebracht. Diese können beispielsweise durch Phosphatierung und/oder Chromatierung vorbehandelt sein.

Die wie oben beschriebe hergestellte lackierte Folie kann auf die Oberfläche eines Formteilrohlinges, d.h. eines noch nicht verformten Substrats, vorzugsweise Metallblech, laminiert werden. Gegenstand der vorliegenden Erfindung ist ein Verfahren zur Herstellung von mit einer Folie der erfindungsgemäßen Art beschichteten Formteilen, dadurch gekennzeichnet, dass
l) eine mit mehreren Schichten beschichtete und noch ungeformte Folie nach zuvor genannter Art hergestellt wird,
II) diese beschichtete, ungeformte Folie auf ein noch ungeformtes Substrat, vorzugsweise ein Metallträger, aufgebracht wird und
III) aus dem so beschichteten ungeformten Substrat Formteile hergestellt werden.

Hierbei kann die Trägerfolie zunächst nacheinander, ggf. mit einem Füller, einem pigmentierten Lack und ggf. einer transparenten Kunststoffolie beschichtet werden. Dieser Schichtaufbau wird auf ein ungeformtes Blech kaschiert, aus dem durch Ausschneiden und Verformen Automobilteile hergestellt werden. Die Anforderungen an die Flexibilität der eingesetzten Lacke müssen folglich auch an den beschriebenen Applikationsverfahren orientiert werden.

Die Aushärtung der Füllerzusammensetzung kann vor dem Überlackieren mit mindestens einer pigmentierten Lackschicht durchgeführt werden.

Die Aushärtung der pigmentierten Basislackschicht kann vor dem Beschichten mit der transparenten Kunststoffolie durchgeführt werden.

Oder die ungeformte Trägerfolie kann auf das nicht verformte Substrat laminiert, anschließend verformt und schließlich lackiert werden.

Oder das Blech kann entweder nacheinander mit einer Trägerfolie, ggf. einem Füller, einem pigmentierten Lack und ggf. einer transparenten Kunststoffolie beschichtet werden. Aus diesem so beschichteten Blech, das als Rolle gelagert und geliefert werden kann, werden Automobilteile ausgeschnitten und geformt.

Die Haftung zu der zu beschichtenden Oberfläche eines Formteilrohlings kann auf unterschiedliche Weise bewerkstelligt werden. Eine Möglichkeit besteht beispielsweise darin, daß Folien, die haftungsvermittelnde Gruppen, wie z.B. Urethangruppen, Säureanhydridgruppen oder Carboxylgruppen aufweisen oder Folien, die durch Coextrusion mit einem haftungsvermittelnde Gruppen aufweisenden Polymer mit haftungsvermittelnden Gruppen versehen worden sind, eingesetzt werden. Die Haftung zwischen der Folie und der zu beschichtenden Oberfläche kann auch durch Verwendung eines Klebstoffes erreicht werden. Hierbei können sowohl bei Raumtemperatur feste als auch bei Raumtemperatur flüssige Klebstoffe zum Einsatz kommen.

Beim Auflaminieren der Folie mit haftungsvermittelnden Gruppen wird im allgemeinen das Substrat mit der Folie derart bedeckt, daß die Haftvermittlerschicht die zu beschichtende Oberfläche berührt. Durch Anwendung von Druck und Wärme wird sodann die Folie auf die zu beschichtende Oberfläche auflaminiert. Druck und Temperatur sind dabei so zu wählen, daß eine feste Verbindung zwischen dem Substrat und der Folie entsteht. Bei Verwendung von bei Raumtemperatur festen Klebstoffen wird ähnlich vorgegangen. Wenn flüssige Klebstoffe zur Anwendung kommen, wird im allgemeinen so vorgegangen, daß der flüssige Klebstoff auf das Substrat appliziert wird und die lackierte Folie auf das erhitzte, mit dem Klebstoff beschichtete Substrat auflaminiert wird.

Die Erfindung wird in den folgenden Ausführungsbeispielen näher erläutert. Alle Angaben über Prozente und Teile sind als Gewichtsangaben zu verstehen, es sei denn, es wird ausdrücklich etwas anderes angegeben.

### Beispiel 1

Eine weißpigmentierte thermoplastische 60 µm dicke Polyurethanträgerfolie (Elastoltan® EL 1184A der Firma Elastogran GmbH) wird auf einem Metallblech fixiert und mit einem handelsüblichen weißpigmentierten nichtwäßrigen Decklack lackiert (Trockenfilmdicke: 20 µm). Die Basislackschicht wird bei 130° C 30 Minuten lang eingebrannt. Auf die lackierte Seite der so lackierten Trägerfolie wird eine transparente Polyesterfolie (Melinex®, ICI), die mit einer 20 µm dicken Haftvermittlerschicht aus einem Polyester auf Basis von Butandiol 1,4 und Terephthalsäure/lsophthalsäure (1:1) versehen worden ist, bei einer Temperatur von 150° C und einem Druck von 25 bar aufgepreßt. Das so erhaltene Laminat wird vom Metallträger abgelöst und bei einer Temperatur von 220° C und einem Druck von 50 bar auf ein Karosserieblech (Bonder 2660 OC) kaschiert.

### Beispiel 2

Die Haftvermittlerschicht einer mit einer 20 µm dicken Haftvermittlerschicht aus einem Polyester auf Basis von Butandiol 1,4 und Terephthalsäure/lsophthalsäure (1:1) versehenen, weißpigmentierten, thermoplastischen 60 µm dicken Polyurethanträgerfolie (Elastollan® EL 1184A der Firma Elastogran GmbH) wird mit einem Releasepapier abgedeckt. Sodann wird die nicht abgedeckte Folienseite mit einem handelsüblichen weißpigmentierten nichtwässrigen Lack lackiert (Trockenfilmdicke: 20 µm). Die Basislackschicht wird bei 130° C 30 Minuten lang eingebrannt. Auf die lackierte Seite der so lackierten Folie wird eine transparente Polyesterfolie (Melinex®, ICI), die mit einer 20 µm dicken Haftvermittlerschicht aus einem Polyester auf Basis von Butandiol 1,4 und Terephthalsäure/lsophthalsäure (1:1) versehen worden ist, bei einer Temperatur von 150° C und einem Druck von 25 bar aufgepreßt. Das so erhaltene Laminat wird nach dem Entfernen des Releasepapiers bei einer Temperatur von 220 ° C und einem Druck von 50 bar auf ein Karosserieblech (Bonder 2660 OC) kaschiert.

### Prüfung der beschichteten Substrate

Die gemäß Beispiel 1 bis 2 hergestellten beschichteten Substrate zeigten sowohl im VDA Steinschlagtest (2x500g bei 2bar) als auch im Mercedes Benz-Kugelschußtest ausgezeichnete Resistenzwerte (VDA: Note 1; Kugelschußtest: Rostgrad=0, Abplatzgrad: ≤ 2 mm²). Zur Prüfung der Korrosionsbeständigkeit wurden die beschichteten Substrate mit einem ca. 10 cm langen Ritz, dessen Tiefe bis zum Blech reicht, versehen und einer Salzsprühnebelprüfung nach DIN 50 021 unterworfen. Nach 6 Wochen war keine Unterrostung am Ritz feststellbar.

## Patentansprüche

1. Mit wenigstens einer pigmentierten Lackschicht beschichtete Folie, die eine Trägerfolie aus Kunststoff mit einer Dicke von 10 bis 500 µm aufweist, **dadurch gekennzeichnet, daß**
A zwischen der Trägerfolie und der pigmentierten Lackschicht gegebenenfalls eine Füllerzusammensetzung aufgebracht ist und
B die pigmentierte Lackschicht mit einer transparenten Kunststoffolie beschichtet ist.

2. Beschichtete Folie nach Anspruch 1, **dadurch gekennzeichnet, daß** zwischen transparenter Kunststoffolie und pigmentierter Lackschicht eine Haftvermittlerschicht angeordnet ist.

3. Beschichtete Folie nach einem der Ansprüche 1 oder 2, **dadurch gekennzeichnet, daß** die transparente Kunststoffolie UV-Licht beständig ist.

4. Beschichtete Folie nach einem der Ansprüche 1 bis 3, **dadurch gekennzeichnet, daß** die Trägerfolie eine thermoplastische Polyolefinfolie oder eine thermoplastische Polyurethanfolie ist.

5. Beschichtete Folie nach einem der Ansprüche 1 bis 4, **dadurch gekennzeichnet, daß** über die transparente Kunststoffolie eine abziehbare Kunststoffolie geschichtet ist.

6. Beschichtete Folie nach einem der Ansprüche 1 bis 5, **dadurch gekennzeichnet, daß** über die nicht lackierte Seite der Trägerfolie eine abziehbare Kunststoffolie geschichtet ist.

7. Verfahren zur Herstellung einer mit mehreren Schichten beschichteten Folie, die eine Trägerfolie aus Kunststoff mit einer Dicke von 10 bis 500 µm aufweist, mit den Schritten
A die Oberfläche der Trägerfolie wird gegebenenfalls mit einer Füllerzusammensetzung lackiert,
B die Oberfläche der Kunststoffträgerfolie bzw. der Füllerzusammensetzung wird mit mindestens einer pigmentierten Lackschicht überlackiert und
C die pigmentierte Lackschicht wird mit einer transparenten Kunststoffolie beschichtet.

8. Verfahren nach Anspruch 7, **dadurch gekennzeichnet, daß** nach Stufe C eine abziehbare Kunststoffolie aufgetragen wird.

9. Verfahren nach Anspruch 7, **dadurch gekennzeichnet, daß** als Trägerfolie eine thermoplastische Polyolefinfolie oder eine thermoplastische Polyurethanfolie eingesetzt wird.

10. Verfahren zur Herstellung von mit einer Folie gemäß einem der Ansprüche 1 bis 6 beschichteten Formteilen, wobei
I) eine mit mehreren Schichten beschichtete und noch ungeformte Folie nach einem der Ansprüche 1 bis 6 hergestellt wird,
II) diese beschichtete, ungeformte Folie auf ein noch ungeformtes Substrat, vorzugsweise ein Metallträger, aufgebracht wird und
III) aus dem so beschichteten ungeformten Substrat Formteile hergestellt werden.

11. Verfahren nach einem der Ansprüche 7 bis 10, **dadurch gekennzeichnet, daß** die Aushärtung der Füllerzusammensetzung vor dem Überlackieren mit mindestens einer pigmentierten Lackschicht durchgeführt wird.

12. Verfahren nach einem der Ansprüche 7 bis 11, **dadurch gekennzeichnet, daß** die Aushärtung der pigmentierten Basislackschicht vor dem Beschichten mit der transparenten Kunststoffolie durchgeführt wird.

13. Verwendung der beschichteten Folie nach einem der Ansprüche 1 bis 6 zur Beschichtung von Fahrzeugkarosserien, vorzugsweise Automobilkarosserien und Haushaltsgeräten, vorzugsweise Kühlschränken, Wasch- und Geschirrspülmaschinen.

## Claims

1. A film coated with at least one pigmented paint coat and having a plastic base film with a thickness of from 10 to 500 µm wherein
A a filler composition is applied if desired between the base film and the pigmented paint coat, and
B the pigmented paint coat is coated with a transparent plastic film.

2. A coated film as claimed in claim 1, wherein an adhesion promoter layer is arranged between the transparent plastic film and the pigmented paint coat.

3. A coated film as claimed in either of claims 1 and 2, wherein the transparent plastic film is resistant to UV light.

4. A coated film as claimed in one of claims 1 to 3, wherein the base film is a thermoplastic polyolefin film or a thermoplastic polyurethane film.

5. A coated film as claimed in one of claims 1 to 4, wherein a plastic film which can be peeled off is applied over the transparent plastic film.

6. A coated film as claimed in one of claims 1 to 5, wherein a plastic film which can be peeled off is applied over the uncoated side of the base film.

7. A process for preparing a film coated with two or more coats and having a plastic base film with a thickness of from 10 to 500 µm, which comprises the steps of
A coating the surface of the base film if desired with a filler composition,
B overcoating the surface of the plastic base film, or the filler composition, with at least one pigmented paint coat, and
C coating the pigmented paint coat with a transparent plastic film.

8. The process as claimed in claim 7, wherein a plastic film which can be peeled off is applied after step C.

9. The process as claimed in claim 7, wherein a thermoplastic polyolefin film or a thermoplastic polyurethane film is employed as the base film.

10. A process for producing moldings coated with a film as claimed in one of claims 1 to 6, which comprises
I) producing a film, coated with two or more coats but as yet unshaped, as specified in any of claims 1 to 6,
II) applying this coated unshaped film to an as yet unshaped substrate, preferably a metal support, and
III) producing moldings from the unshaped substrate thus coated.

11. The process as claimed in one of claims 7 to 10, wherein the filler composition is cured before being overcoated with at least one pigmented paint coat.

12. A process as claimed in one of claims 7 to 11, wherein the pigmented base coat is cured before being coated with the transparent plastic film.

13. The use of the coated film as claimed in one of claims 1 to 6 for coating vehicle bodies, preferably car bodies and domestic appliances, preferably refrigerators, washing machines and dishwashers.

## Revendications

1. Pellicule revêtue d'au moins une couche de peinture pigmentée, qui comporte une pellicule de support à base de matière plastique, ayant une épaisseur de 10 à 500 µm, **caractérisée en ce que**
A une composition d'apprêt de garnissage est éventuellement appliquée entre la pellicule de support et la couche de peinture pigmentée, et
B la couche de peinture pigmentée est revêtue d'une pellicule de matière plastique transparente.

2. Pellicule revêtue selon la revendication 1, **caractérisée en ce qu'**une couche de promoteur d'adhérence est disposée entre pellicule de matière plastique transparente et couche de peinture pigmentée.

3. Pellicule revêtue selon la revendication 1 ou 2, **caractérisée en ce que** la pellicule de matière plastique transparente est résistante à la lumière UV.

4. Pellicule revêtue selon l'une quelconque des revendications 1 à 3, **caractérisée en ce que** la pellicule de support est une pellicule de polyoléfine thermoplastique ou une pellicule de polyuréthanne thermoplastique.

5. Pellicule revêtue selon l'une quelconque des revendications 1 à 4, **caractérisée en ce que** la pellicule de matière plastique transparente est revêtue d'une pellicule de matière plastique pelable.

6. Pellicule revêtue selon l'une quelconque des revendications 1 à 5, **caractérisée en ce qu'**une pellicule de matière plastique pelable est appliquée sur le côté non peint de la pellicule de support.

7. Procédé pour la fabrication d'une pellicule revêtue de plusieurs couches, qui comporte une pellicule de support à base de matière plastique, ayant une épaisseur de 10 à 500 µm, comportant les étapes suivantes :
A on applique éventuellement une composition d'apprêt de garnissage sur la surface de la pellicule de support,
B la surface de la pellicule de support en matière plastique ou de la composition d'apprêt de garnissage est recouverte d'au moins une couche de peinture pigmentée et
C on applique une pellicule de matière plastique transparente sur la couche de peinture pigmentée.

8. Procédé selon la revendication 7, **caractérisé en ce qu'**une pellicule de matière plastique pelable est appliquée après l'étape C.

9. Procédé selon la revendication 7, **caractérisé en ce qu'**on utilise en tant que pellicule de support une pellicule de polyoléfine thermoplastique ou une pellicule de polyuréthanne thermoplastique.

10. Procédé pour la fabrication de pièces mises en forme, revêtues d'une pellicule selon l'une quelconque des revendications 1 à 6, dans lequel
I) une pellicule revêtue de plusieurs couches et non encore mise en forme est obtenue selon l'une quelconque des revendications 1 à 6,
II) on applique la pellicule revêtue, non mise en forme, sur un subjectile non encore mis en forme, de préférence un support métallique, et
III) on fabrique des pièces mises en forme à partir du subjectile non mis en forme ainsi revêtu.

11. Procédé selon l'une quelconque des revendications 7 à 10, **caractérisé en ce que** le durcissement de la composition d'apprêt de garnissage est effectué avant le recouvrement avec au moins une couche de peinture pigmentée.

12. Procédé selon l'une quelconque des revendications 7 à 11, **caractérisé en ce que** le durcissement de la couche de peinture de base pigmentée est effectué avant le revêtement avec la pellicule de matière plastique transparente.

13. Utilisation de la pellicule revêtue selon l'une quelconque des revendications 1 à 6, pour le revêtement de carrosseries de véhicules, de préférence de carrosseries d'automobiles, et d'appareils domestiques, de préférence des réfrigérateurs, machines à laver le linge et la vaisselle.
